(19) **Europäisches Patentamt**
**European Patent Office**
**Office européen des brevets**

(11) **EP 2 820 901 B1**

(12) **EUROPEAN PATENT SPECIFICATION**

(45) Date of publication and mention
of the grant of the patent:
**27.12.2017 Bulletin 2017/52**

(51) Int Cl.:
***H04W 72/04*** *(2009.01)*    ***H04W 16/14*** *(2009.01)*

(21) Application number: **12715461.5**

(86) International application number:
**PCT/SE2012/050241**

(22) Date of filing: **02.03.2012**

(87) International publication number:
**WO 2013/129986 (06.09.2013 Gazette 2013/36)**

(54) **BASE STATION AND METHOD FOR DETERMINING A SPECTRUM ALLOCATION IN A WIRELESS NETWORK**

BASISSTATION UND VERFAHREN ZUR BESTIMMUNG EINER SPEKTRENZUWEISUNG IN EINEM DRAHTLOSEN NETZWERK

STATION DE BASE ET PROCÉDÉ POUR DÉTERMINER UNE ATTRIBUTION DE SPECTRE DANS UN RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.01.2015 Bulletin 2015/02**

(73) Proprietor: **Telefonaktiebolaget LM Ericsson (publ)**
**164 83 Stockholm (SE)**

(72) Inventors:
• **FURUSKÄR, Anders**
**S-113 44 Stockholm (SE)**
• **DAHLMAN, Erik**
**S-112 23 Stockholm (SE)**
• **FRODIGH, Carl Magnus**
**S-192 73 Sollentuna (SE)**
• **JOHANSSON, Niklas**
**S-191 38 Sollentuna (SE)**
• **PARKVALL, Stefan**
**S-113 25 Stockholm (SE)**

(74) Representative: **Ericsson Patent Development Torshamnsgatan 21-23 164 80 Stockholm (SE)**

(56) References cited:
**WO-A1-2011/127447**

• **Xiangpeng Jing: "SPECTRUM COORDINATION PROTOCOLS AND ALGORITHMS FOR COGNITIVE RADIO NETWOKRS", Ph.D dissertation , 1 January 2008 (2008-01-01), page i, XP055043291, Retrieved from the Internet: URL:http://www.google.de/url?sa=t&rct=j&q= spectrum%20coordination%20protocols%20an d% 20algorithms%20for%20cognitive%20radio%20n etworks&source=web&cd=1&cad=rja&ved=0CC EQF jAA&url=http%3A%2F%2Fmss3.libraries.rutger s.edu%2Fdlr%2Foutputds.php%3Fpid%3Drutge rs -lib%3A24143%26mime%3Dapplication%2Fpdf %26 ds%3DPDF-1 [retrieved on 2012-11-06]**
• **LIANGPING MA ET AL: "Dynamic open spectrum sharing MAC protocol for wireless ad hoc networks", 2005 1ST IEEE INTERNATIONAL SYMPOSIUM ON NEW FRONTIERS IN DYNAMIC SPECTRUM ACCESS NETWORKS, BALTIMORE, MD, USA, 8 November 2005 (2005-11-08), pages 203-213, XP010855117, DOI: 10.1109/DYSPAN.2005.1542636 ISBN: 978-1-4244-0013-3**

- JUAN D DEATON ET AL: "The effects of a Dynamic Spectrum Access overlay in LTE-Advanced networks", IEEE INTERNATIONAL SYMPOSIUM ON NEW FRONTIERS IN DYNAMIC SPECTRUM ACCESS NETWORKS (DYSPAN), 3 May 2011 (2011-05-03), - 6 May 2011 (2011-05-06), pages 488-497, XP031953909, AACHEN DOI: 10.1109/DYSPAN.2011.5936239 ISBN: 978-1-4577-0177-1

- CARLOS CORDEIRO ET AL: "C-MAC: A Cognitive MAC Protocol for Multi-Channel Wireless Networks", 2007 2ND IEEE INTERNATIONAL SYMPOSIUM ON NEW FRONTIERS IN DYNAMIC SPECTRUM ACCESS NETWORKS : [DYSPAN 2007] ; DUBLIN, IRELAND, 17 - 20 APRIL 2007, 1 April 2007 (2007-04-01), pages 147-157, XP031095614, IEEE, USA ISBN: 978-1-4244-0663-0

**Description**

TECHNICAL FIELD

Embodiments herein relate to a base station and methods therein. In particular, it relates to determining a spectrum allocation to be used by the base station in a wireless network.

BACKGROUND

Communication devices such as User Equipments (UE) are also known as e.g. mobile terminals, wireless terminals and/or mobile stations. User equipments are enabled to communicate wirelessly in a wireless network, sometimes also referred to as a wireless communication system, a cellular communications network, a cellular radio system or a cellular network. The communication may be performed e.g. between two user equipments, between a user equipment and a regular telephone and/or between a user equipment and a server via a Radio Access Network (RAN) and possibly one or more core networks, comprised within the cellular communications network.

User equipments may further be referred to as mobile telephones, cellular telephones, laptops, or surf plates with wireless capability, just to mention some further examples. The user equipments in the present context may be, for example, portable, pocket-storable, hand-held, computer-comprised, or vehicle-mounted mobile devices, enabled to communicate voice and/or data, via the RAN, with another entity, such as another user equipment or a server.

The cellular communications network covers a geographical area which is divided into cell areas, wherein each cell area is served by a base station, e.g. a Radio Base Station (RBS), which sometimes may be referred to as e.g. "eNB", "eNodeB", "NodeB", "B node", BTS (Base Transceiver Station), or AP (Access Point), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the user equipments within range of the base stations. In the context of this disclosure, the expression Downlink (DL) is used for the transmission path from the base station to the user equipment. The expression Uplink (UL) is used for the transmission path in the opposite direction i.e. from the user equipment to the base station.

In some RANs, several base stations may be connected, e.g. by landlines or microwave, to a radio network controller, e.g. a Radio Network Controller (RNC) in Universal Mobile Telecommunications System (UMTS), and/or to each other. The radio network controller, also sometimes termed a Base Station Controller (BSC) e.g. in GSM, may supervise and coordinate various activities of the plural base stations connected thereto. GSM is an abbreviation for Global System for Mobile Communications (originally: Groupe Special Mobile).

In 3rd Generation Partnership Project (3GPP) Long Term Evolution (LTE), base stations, which may be referred to as eNodeBs or even eNBs, may be directly connected to one or more core networks.

3GPP LTE radio access standard has been written in order to support high bitrates and low latency both for uplink and downlink traffic. All data transmission in LTE is controlled by the radio base station.

Cellular communication networks typically operate in so-called licensed spectrum. A regulator allocates a certain total frequency band for a cellular service, and operators get licenses for exclusive use of individual subsets of this frequency band. For example, the total frequency band 915-935MHz may be divided into four 5MHz subsets for use by four different operators.

In Wireless Local Area Networks (LANs), spectrum sharing is handled with a Carrier Sense Multiple Access (CSMA) protocol. The basic principle of this protocol is that nodes that want to transmit a packet, first sense the interference level on the frequency band, i.e. spectrum band. If the interference level exceeds a certain threshold, the spectrum is considered to be busy, and a new attempt is made after a random back-off time. The CSMA principle may be complemented with a Request-to-Send - Clear-to-Send (RTS-CTS) mechanism. In this case the actual data transmission is preceded by shorter RTS and CTS messages from the transmitter and receiver respectively, and nodes who hear these messages refrain from transmitting during the following data transfer.

Dividing the frequency band, i.e. the spectrum into subsets for exclusive use by individual operators is inefficient when the subsets are not fully utilized. This can happen in space', due to an operator not having deployed base stations in a certain area, and 'in time' due to temporal variations in traffic.

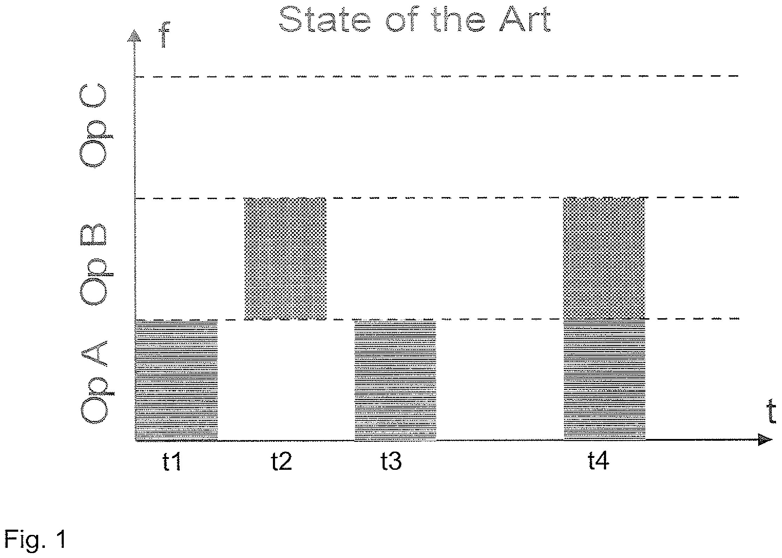

In **Figure 1,** spectrum usage over time is illustrated for a case with three operators A, B, and C. Consider operators A, B, and C having licensed to use one third each of a total frequency band. Only the operators A and B use the spectrum in this particular area though, so operator C's spectrum is unused. Further, traffic load is moderate so that in most time instances, only one of operators A and B utilize their spectrum. In Figure 1, spectrum allocated to be used by operator A is represented by checked areas and spectrum allocated to be used by operator B is represented by striped areas. At different times t1, t2, and t3 in Figure 1, only one operator at a time needs to use its respective licensed frequency band. At a time t4, both operators need to use their respective licensed frequency band. As can bee seen from Figure 1, a lot of available spectrum remains unused. The CSMA and RTS/CTS protocols only allow spectrum sharing in time between operators. The time between allocations is further random. This makes it difficult to support certain services. Instead of the desired equal sharing of the spectrum band at t4 in Figure 1, the systems would first both try to use the spectrum. This would result in a collision, after which both of the systems wait for a random back-off before trying again. This results in increased delays and less efficient spectrum utilization.

One solution to this problem is disclosed in document 2005 IEEE 16th International Symposium on Personnel, Indoor and Mobile Communication: "A Dynamic Spectrum Allocation between Network Operators with Priority-based Sharing and Negotiation" Kim *et al.* This solution uses an architecture where the spectrum allocation is determined in central spectrum manager nodes per operator and a spectrum broker node between operators' spectrum managers. A bandwidth request from a base station hence has to propagate two levels of central nodes before being processed together with requests from other operators, which is cumbersome.

The Ph.D dissertation "SPECTRUM COORDINATION PROTOCOLS AND ALGORITHMS FOR COGNITIVE RADIO NETWOKRS", published on 1 January 2008 by Xiangpeng Jing relates to a method for the spectrum coexistence between IEEE 802.11b and IEEE 802.16a networks based on the common spectrum coordination channel, CSCC, that is a control channel coordinating the operations between transceivers using different radio technologies. An IEEE 802.16a base station periodically receives spectrum usage information, including the used frequency band, from the N neighbouring IEEE 802.11b base stations and computes a map of spectrum activity used to select the available frequencies.

Document WO 2011/127447 A1 discloses that a WWAN / WLAN base station, is deployed on white space frequencies and obtains information about the frequencies selected by the neighbouring base stations over the backhaul or by means of direct measurements. The base station, with the information about the frequencies used by the neighbouring base stations, creates a list of candidate frequencies and selects from these candidate frequencies, a frequency that is not used by the neighbouring base stations.

SUMMARY

It is therefore an object of embodiments herein to provide a more efficient way of using a spectrum in a wireless network. The present invention provides a method in a first base station for determining a spectrum allocation to be used by the first base station in a wireless network and for informing other second base stations about said spectrum allocation according to the subject-matter of independent claim 1 and a corresponding first base station according to the subject-matter of independent claim 8.

Embodiments of the invention are defined in the dependent claims.

According to a first aspect useful for understanding the invention, the object is achieved by a method in a first base station for determining a spectrum allocation to be used by the first base station in a wireless network. The wireless network is dedicated a spectrum S. The first base station is associated with a first operator. The first base station detects a number N of second signals. Each second signal is transmitted by a respective second base station to announce its intended use of said spectrum at a time t. Each second base station is associated with a respective second operator or the first operator. The first base station then determines the spectrum allocation to be used by the first base station at the time t as a subset of the spectrum S. The subset of the spectrum S is a function of N.

According to a second aspect useful for understanding the invention, the object is achieved by a first base station for determining a spectrum allocation to be used by the first base station in a wireless network. The wireless network is dedicated a spectrum S. The first base station is associated with a first operator. The first base station comprises a detecting circuitry configured to detect a number N of second signals. Each second signal is transmitted by a respective second base station to announce its intended use of said spectrum at a time t. Each second base station is associated with a respective second operator or the first operator. The first base station further comprises a determining circuitry configured to determine the spectrum allocation to be used by the first base station at the time t as a subset of the spectrum S. The subset of the spectrum S is a function of N.

Thanks to that the first base station detects the number of second signals from the respective second base stations announcing its intended use of said spectrum at a time t, the first base station can determine the spectrum allocation to use at the time t as a subset of the spectrum S being a function of N. I.e. how may other base stations, i.e. second base stations that the first base station have to share the network with. If only a few are detected, it can use a great part of the Spectrum S but if it detects that many second base stations intend to use the spectrum S, it can only use a small part of the spectrum S. in this way the first base station allocates all part of the spectrum S that is available, i.e. not used by others at the time t. Thereby a more efficient way of using a spectrum in a wireless network is provided.

An advantage with embodiments herein is that they provide better performance such as higher data rates and capacity, as a result of more efficient spectrum utilization. The sharing is done so that an operator is guaranteed a controlled share of the spectrum with minimum delay.

BRIEF DESCRIPTION OF THE DRAWINGS

Examples of embodiments herein are described in more detail with reference to attached drawings in which:

Figure 1 is a schematic block diagram illustrating prior art.
Figure 2 is a schematic block diagram illustrating embodiments in a wireless network.
Figure 3 is a schematic block diagram illustrating embodiments in a wireless network.
Figure 4 is a flowchart depicting embodiments of a method in a base station.
Figure 5 is a schematic block diagram illustrating embodiments in a wireless network.
Figure 6 is a schematic block diagram illustrating embodiments in a wireless network.
Figure 7 is a schematic block diagram illustrating embodiments of a base station.

DETAILED DESCRIPTION

Embodiments will be exemplified in the following non-limiting description.
In embodiments herein spectrum is shared between operators. This may be enabled by operators (i) announcing their intended use of the spectrum and (ii) detecting other operators intended use of spectrum. This information may be shared on an announcement channel or a set of announcement channels. Knowing which operators intend to use the spectrum, a rule known by the operators determines which operator gets to use which subset of the total spectrum band. Separate announcement channels may be used for downlink and uplink. Some embodiments herein use over-the-air signalling between base stations of different operators.

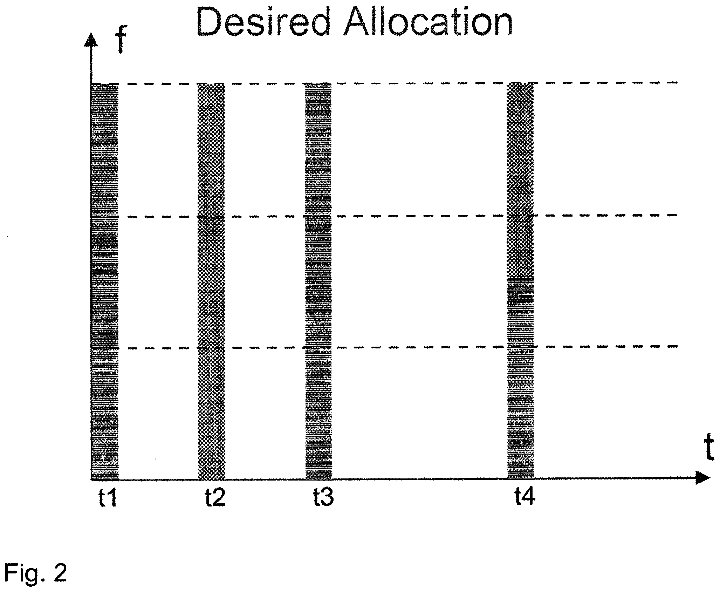

**Figure 2** illustrates a frequency allocation, also referred to as spectrum allocation, resulting from this principle according to embodiments herein. In Figure 2 the desired, more efficient, spectrum usage over time is illustrated for a case with three operators A, B, and C wherein operator C's spectrum is unused. Consider operators A, B, and C having licensed to use part of or the total frequency band from time to time. The licenses may e.g. be such that the operators always have the right to use to use a certain subset of the spectrum and an option to use other subsets if they are not used by others. Only the operators A and B use the spectrum in this particular area though, so operator C's spectrum is unused. Further, traffic load is moderate so that in most time instances, only one of operators A and B utilize their spectrum. In Figure 2, spectrum allocated to operator A is represented by checked areas and spectrum allocated to operator B is represented by striped areas.
According to embodiments herein, operators A and B in this example get to use the full total frequency band in case only one of them are active, such as at the times t1, t2, and t3. In cases where both operators A and B are active at the same time such as in time t4, the operators A and B get to use half of the total frequency band. Note that the spectrum fraction allocated to an active operator may not be below $1/N_{active}$, where $N_{active}$ is the number of active operators in a given time. This fraction may further be greater than or equal to $1/N_{license}$, where $N_{license}$ is the number of operators with a spectrum license.

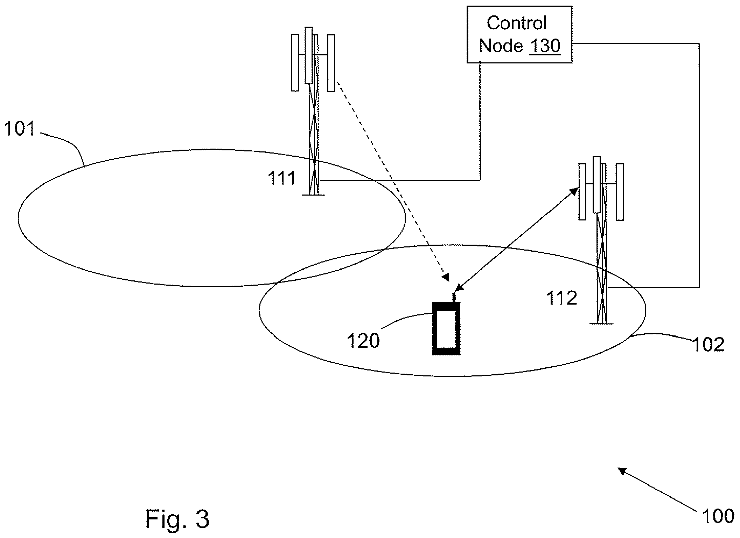

**Figure 3** depicts a **wireless network 100** in which embodiments herein may be implemented. The wireless network 100 is a wireless communication network such as an LTE, WCDMA, GSM network, any 3GPP cellular network, Wimax, Wi-Fi or any cellular or wireless network or system. The wireless network 100 is dedicated a **spectrum S.** The spectrum S is a part of a frequency band such as e.g. the 3.4 to 4.0GHz band.
The wireless network 100 comprises cells which in this simple example comprises two cells referred to as **a first cell 101** and **a second cell 102.** A **first base station 111** is serving the first cell 101 and a **second base station 112** is serving the second cell 102. The wireless network 100 may comprise one or more second base stations 112, each serving a respective cell. The first base station 111 and the second base station 112 are access points that may be radio base stations such as e.g. eNBs, eNodeBs, or Home Node Bs, Home eNode Bs, or any other network nodes capable to serve a user equipment or a machine type communication device in a wireless network. The first base station 111 is associated with a first operator, and the second base station 112 is associated with the first operator or the second operator. A dedicated **spectrum S** of the wireless network 100 is shared by a number of operators. As an example, assume that the second base station 112 is associated with the second operator which means that the spectrum S is shared by the first operator and a second operator. In some embodiments the first base station 111 represents one first operator and the second base station 112 represents one second operator. According to these embodiments and in scenarios with multiple second base stations 112, each second base station represents a respective different second operator.
In some embodiments, the wireless network 100 may comprise further cells served by further base stations (not shown). Each of the respective further base stations may be associated to the first operator, or to one or more second operators. The second operators may represent one or more operators that shall share the spectrum S with the first operator.
The term operator herein comprises both large scale cellular operators, operating networks of several thousands of base stations, and single individual operators operating a single base station, e.g. deployed in a home.

A number of user equipments are located in the cells 101 and 102. In the simple example in the scenario of Figure 3, a **user equipment 120** is located in the second cell 102 which is configured to communicate within the cellular network 100 via the second base station 112. The user equipment 120 may further be able to hear transmitted signals from the first base station 111, the transmitted signals are represented by a dashed line arrow. Note that the user equipment 120 may also be located in the first cell and may then be configured to communicate within the wireless network 100 via the first base station 111. The user equipment 120 may then be able to hear transmitted signals from the second base station 112.

The user equipment 120 may e.g. be a mobile terminal or a wireless terminal, a mobile phone, a computer such as e.g. a laptop, a Personal Digital Assistant (PDA) or a tablet computer, sometimes referred to as a surf plate, with wireless capability, or any other radio network units capable to communicate over a radio link in a wireless network.

The first base station 111 and the second base station 112 may be connected to a **control node 130.** The control node 130 may e.g. control allocating of announcement channels to the different base stations such as the first base station 111 and the second base station 112. The announcement channels will be used by the first base station 111 and the second base station 112 to announce their intended use of the spectrum. This and the announcement channels will be described more in detail below.

The control node 130 may be aware of the number of operators present in a geographical area. This may be accomplished by new base stations registering with the control node when deployed. Based on this information, the control node 130 may assign operators and base stations, such as the first base station's 111 and the second base station's 112, announcement channels.

The control node 130 may reside in one of the base stations such as the first base station 111 or the second base station 112, or in a central network node such as a Radio Network Controller (RNC) or Radio Resource Management (RRM) server.

The control node 130 may be a database comprising information of all installed access points such as second base stations 112 of all operators being given access to the spectrum S by the national regulator. The control node 130 may know the rules how the spectrum S is divided given the number of detected access points of a respective operator, at a certain occasion. The control node 130 may know the location of these first and second base stations 111, 112. The control node 130 may also be much simpler only comprising rules how the spectrum S shall be divided as a function of N. This will be described more in detail below. The control node 130 may know where e.g. in frequency and time, the announcement channel for each operator is located. The announcement channels may also be distributed to each respective operator's network, and within the operators network they may be further distributed all the way to the radio controllers or at each access point, i.e. base station 111, 112.

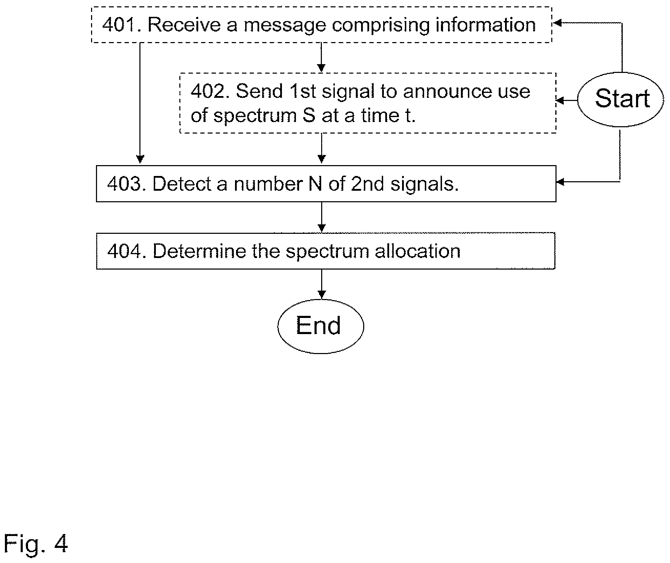

Embodiments of a method in the first base station 111 for determining a spectrum allocation to be used by the first base station 111 in the wireless network 100, will now be described with reference to a flowchart depicted in **Figure 4.** As mentioned above, the wireless network 100 is dedicated the spectrum S and the first base station 111 is associated with the first operator. As an example scenario, the first base station 111 of the first operator requires to use the spectrum S at a time t. The method comprises the following actions, which actions may be taken in any suitable order. Dashed lines of some boxes in Figure 4 indicate that this action is not mandatory.

**Action 401**

In this optional action, the first base station 111 receives a message from the control node 130. The message comprises information which operators that are active in the neighbourhood of the base station 110. Operators in the neighbourhood here means operators that may require to make use of the spectrum S This message may be sent periodically, e.g. every 10s, and/or event-triggered when there is a change in the set of active operators and base stations.

The message may be received on a master announcement channel. The master announcement channel will be described more in detail below.

**Action 402**

This is an optional action. To inform other base stations, the first base station 111 sends a first signal to announce that the first base station 111 intends to use said spectrum S at a time t. This may be sent at time t-1 and may be transmitted to be heard by base stations in the neighbourhood, such as any of the one or more of the second base stations 112. In some embodiments, this action is performed by sending the first signal on an announcement channel of the wireless network 100. The announcement channel will be described more in detail below.

The first signal may comprise **a first identity $Id_x$** associated with an order x. The identity $Id_x$ may be randomly chosen, pseudo randomly chosen, or assigned by the control node 130. The Identity may e.g. be a pseudo randomly generated number between 0 and 31. The order may be equal to this number so that, $x = Id_x$. The identity may also be a symbol sequence, in which case a function $f_{order}$ that maps the identity to an order is defined so that $x=f_{order}(Id_x)$. For an example that will be described below, the order of the first identity is 17.

This action may be performed by sending the first signal comprising the first identity $Id_x$ directly to the one or more second base stations 112, or via a user equipment 120 detecting the first signal and forwarding the first signal comprising the first identity $Id_x$ to the one or more second base stations 112. The first signal may be forwarded on an announcement forwarding channel of the cellular system 100. The announcement forwarding channel will be described in further detail below.

The first base station 111 may e.g. send an announcement signal Tx at time t-1, with the identity $Id_x$ on the announcement channel.

This means that a subset of user equipments such as the user equipment 120 of other operators such as the second operator, which detect the announcement signal, may forward the signal with $Id_x$. This is done in order to reach base stations that did not hear the announcement signal, so-called hidden nodes, but that interfere with user equipments connected to the first base station 111 that sent it. The subset of user equipments forwarding the announcement signal may e.g. be the ones connected to the first base station 111, or if known the ones about to receive data.

## Action 403

To find out which further base stations to share the spectrum S with at a time t, the first base station 111 listens for and detects a number N of second signals. Each second signal is transmitted by a respective second base station 112 to announce its intended use of said spectrum at the time t. Each second base station 112 is associated with a respective second operator or the first operator.

In some embodiments, the number N of second signals represents the number of second operators. In these embodiments, the number N may represent the number of operators having access points such as second base stations 112 that want to transmit. If an operator has multiple access points that have data traffic to transmit it would not get more spectrum but it may utilize frequency reuse capabilities of the system. In some embodiments each operator has its own announcement channel on a separate frequency. This is an advantage since no time synchronisation is required.

The number N of second signals may be one or more than one. In some scenarios the number N of second signals is zero, i.e. no second base station 112 intends to use the spectrum S at the time t.

One or more of the second signals may be received from the respective second base station 112 via a user equipment 120 associated with the second operator or the first operator. The second signals may be transmitted by the respective second base stations 112.

The second signals may be detected on an announcement channel of the cellular system 100. The announcement channel will be described more in detail below. The first base station 111 listens to the announcement channel for any second signals that e.g. are transmitted by the second base stations 112. The second signals may be detected by attempting to receive, e.g. demodulate and decode, information on the announcement channels, e.g. characterized by a predetermined time, frequency and/or code allocation.

In some embodiments one or more of the second signals are received from the respective second base station 112 via a user equipment 120. These one or more second signals may be detected on an announcement forwarding channel of the cellular system 100. Each one or more second signals may comprise a respective second identity associated with a respective order. For the example to be described below the order of the second identity is 11.

This means that for example the base station 111 may detect the number N of announcement signals and forwarded signals with unique Ids sent by other operators by means of the second base stations 112 on an announcement channel at time t-1, and their identities. The time t-1 is used as an example to denote a time instant before time t, i.e. sending an announcement at time t-1 indicates that the spectrum will be used at time t.

## Action 404

The first base station 111 then uses the detected number N of second signals to determine the spectrum allocation. The spectrum allocation to be used by the first base station 111 at the time t is determined as a subset of the spectrum S, which subset of the spectrum S is a function of N.

In some embodiments, the function of N is a fraction 1/N+1 of the subset of the spectrum S. In the embodiments wherein the number N of second signals is zero, the first base station 111 may use the full spectrum S.

In some embodiments, the function of N is a function of operator weights or the amount of guaranteed spectrum that the operator contributes with to the sharing. As an example, if three operators A, B, and C contribute with $S_{A0}=20MHz$, $S_{B0}=10MHz$, and $S_{C0}=10MHz$ of spectrum respectively, the operators may be given weights such as for example $w_A = S_{A0}/(S_{A0}+S_{B0}+S_{C0}) = \frac{1}{2}$, $w_{B0} = S_{A0}/(S_{A0}+S_{B0}+S_{C0}) = 1/4$, and $w_C = S_{A0}/(S_{A0}+S_{B0}+S_{C0}) = \frac{1}{4}$. Then, the spectrum allocation of operator X at time t is given by

$$S_X(t) = w_X / (a_A(t) \cdot w_A + a_B(t) \cdot w_B + a_C(t) \cdot w_C)$$

Where $a_X(t)$ is 1 if operator X has announced that it will use the spectrum at time t, and otherwise 0. Hence, if operator A and B but not C are active at time t, operator A gets

$$S_A(t) = 0.5 / (1 \cdot 0.5 + 1 \cdot 0.25 + 0 \cdot 0.25) = 0.5/0.75 = 2/3,$$

And operator C gets

$$S_C(t) = 0.25 / (1 \cdot 0.5 + 1 \cdot 0.25 + 0 \cdot 0.25) = 0.25/0.75 = 1/3,$$

As mentioned above, the first signal may comprises a first identity $Id_x$ associated with an order x. The order x may simply be a characteristic of the identities that make it possible to put them in an ordered sequence. If the identity is a number, the order may be set equal to the number, i.e. $x = Id_x$. If the identity is a more general symbol sequence, the sequences must have an order, e.g. given a function $f_{order}$ so that $x = f_{order}(Id_x)$. Each one or more second signals may comprise a respective second identity associated with a respective order. The first identity and the one or more second identities make up a set of identities $\{Id_n\}$. In some embodiments an allocated position within the spectrum S is given by the order x of the first identity $Id_x$ in the set of identities $\{Id_n\}$.

Please consider the following example relating to the embodiments wherein the function of N is a fraction 1/N+1 of the subset of the spectrum S.

For example if only one second signal is received, N is 1, i.e. in this case 1/N+1=1/2. This means that the spectrum shall be divided into two parts, a first part and a second part, whereof the first base station 111 may use one of the two parts of the spectrum S. The first base station 111 now knows that it can use half of the spectrum S, it then requires knowing which part of, i.e. position in the spectrum S to use. The position within the spectrum S may be given by the order of $Id_x$ in the set $\{Id_n\}$ In the example mentioned above, the order of the first identity is 17 which first identity is associated with the first base station 111, and the order of the second identity is 11. The order 17 of the first identity is subsequent to the order of the second Id that is 11. This means that the first base station 111 shall use the second part of the spectrum S and the second base station 112 shall use the first part of the spectrum S.

The following is applicable to any of the embodiments above.

**Announcement channels**

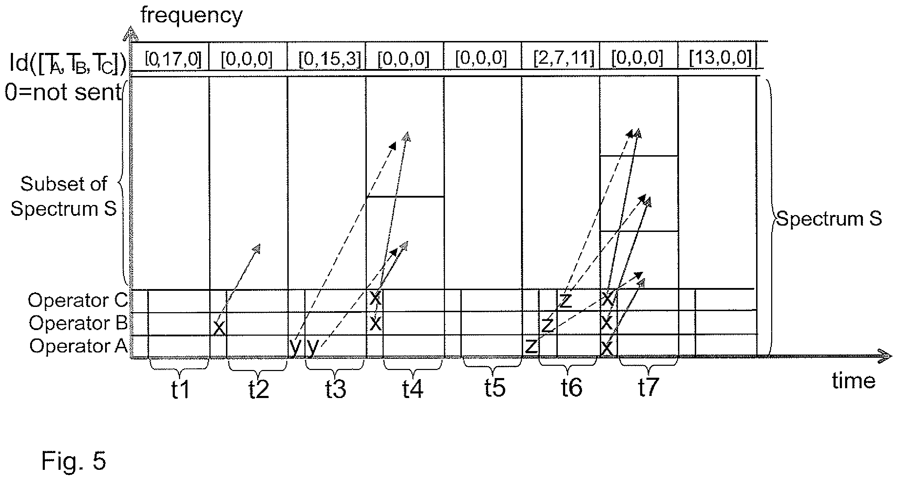

Another example is illustrated in **Figure 5.** Figure 5 is a schematic frequency and time diagram which illustrates how base stations of operators use the spectrum S over time t1-t7 for an embodiment with three operators A, B, and C. For example, the operator A may be the first operator associated with the first base station 111. The operator B and C may be the second operators whereof one of the operators B or C may be the second operator associated with the second base station 112. As can be seen from this example, a part of the full spectrum S is shared which is referred to as a subset of the full spectrum S in Figure 5. The base stations such as the first base station 111 of the operators A, B and C, each have a small dedicated subset of the spectrum, referred to as Operator A, Operator B and Operator C in Figure 5. This may be used e.g. for signaling or smaller traffic volumes.

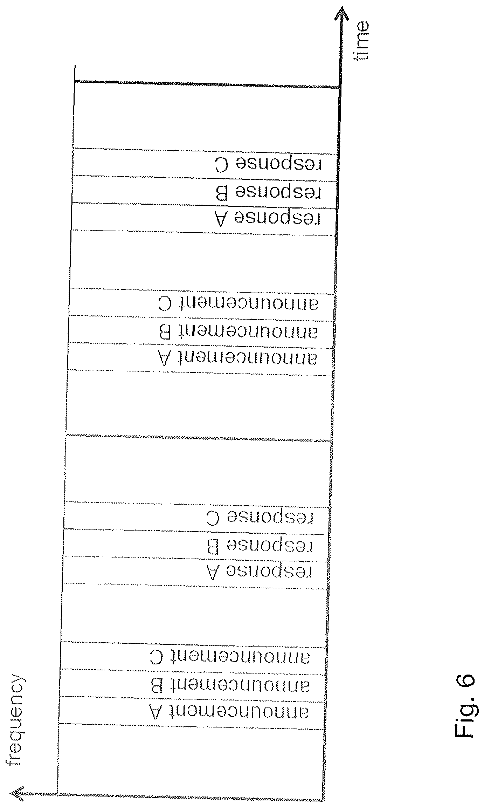

The announcement channels may be time multiplexed between operators. In a system, e.g. like LTE, where time is dived into symbols and subframes and/or frames of several symbols, this may be performed within sub-frames, denoted y in Figure 5, see also Figure 6 which will be described more in detail below, so that transmission and reception can be done within a subframe, e.g. the subframe (t-1) preceding the subframe (t) for which the announcements are valid. Announcement and/or forwarding signals transmitted on the announcement and/or forwarding may further use other, e.g. shorter symbols than regular signals. This is beneficial e.g. in order to be able to time-multiplex several announcement and forwarding channels in one subframe.

There may be synchronization between the base stations of the operators, such that the announcement channels deterministically do not overlap. This is an advantage since transmission and reception does not have to occur at the same time.

With time division between operators, in a system with subframes of length 14 symbols (indexed 1-14), the announcement channels of three operators may e.g. be allocated symbols 4, 5, and 6, and the announcement forwarding channels allocated to subframes 10, 11, and 12, see Figure 6.

Alternatively, with a frequency division component, the announcements may be sent at the same time, but on different frequencies, see figure 5. This is denoted z, in Figure 5. The announcement channels may further be frequency multiplexed between operators. This is denoted x in Figure 5.

As mentioned above, the control node 130 may know where the announcement channels for each operator are located. The announcements channels may also be distributed to each operator's network, and within the operators network it may be further distributed all the way to the radio controllers or at each access point, i.e. base station 111, 112.

In some embodiments each operator has its own announcement channel on a separate frequency. This is an advantage since no time synchronisation is required before transmitting on the announcement channels.

**Figure 6** is a schematic frequency and time diagram which illustrates possible design of an announcement channels and forwarding channels being time multiplexed within subframes and the three operators A, B and C being time multiplexed within subframes, which in this example are performed in a mutually synchronized way. This e.g. means that subframes start and end at similar times in different base stations such as e.g. the first base station 111 and the second base station 112, and for different operators. In this case if an operator is not active in a certain subframe (t), another operator may use that subframe without interfering in a subsequent timeslot (t+1). If synchronization between base stations and operators is not in place, there is a risk that interference between subframes occurs. A solution to this problem is that the first base station 111 announces intended spectrum usage not only at time t, but at time t and t+1. This avoids interference between subframes at the cost of (one subframe) extra delay when accessing spectrum.

Synchronization between base stations and operators may be obtained by a common time reference distributed on the backhaul, or via listening to, i.e. receiving signals from neighboring base stations.

Uplink Pilot Time Slots (UpPTSs) may be present in the wireless network 100. These may be used for the user equipments such as the user equipment 120, to send reference signals to the first base station 111 and the second base station 112. In some embodiments the forwarding channel and/or the announcement channel may be comprised within an UpPTS.

One announcement channel per operator may be comprised within the dedicated spectrum S.

As mentioned above the first signal comprising the first identity $Id_x$ may be sent via a user equipment 120 detecting the first signal and forwarding the first signal comprising the first identity $Id_x$ to the one or more second base stations 112. The first signal may be forwarded on an announcement forwarding channel of the cellular system 100.

Similar to the announcement channel, the announcement forwarding channel may be characterized by a specific time, frequency, and/or code allocation. In order to let user equipments such as the user equipment 120 detect the announcement channel and prepare transmission, the announcement forwarding channel is typically delayed in time as compared to the announcement channel.

As mentioned in action 401, the first base station 111 may receives a message from the control node 130. The message comprises information which operators that are active in the neighbourhood of the base station 110. The message may be received on a master announcement channel. Operators in the neighbourhood here means operators that may require to make use of the spectrum S.

To signal which operators are active in the area, i.e. the operators that may require to make use of the spectrum S, the master announcement channel may be allocated with a longer period, i.e. more seldom, than the allocation of the announcement channel. Also the master announcement channel may be characterized by a specific time, frequency, and/or code allocation. The master announcement channel may also be sent via the 'backhaul', e.g. wireless or via a fixed wired infrastructure connecting the base stations such as the first base station 111 and the second base station 112. This may then be done by the control node 130.

In some embodiments cross carrier scheduling is used to schedule user equipments such as the user equipment 120 in the shared spectrum S. Cross carrier scheduling is a means for scheduling user equipments such as the user equipment 120 using a control channel on one carrier to data channels on other carriers. In one embodiment the control channel may be allocated in a predetermined 'home spectrum' of each operator. The other carriers then correspond to spectrum outside this spectrum.

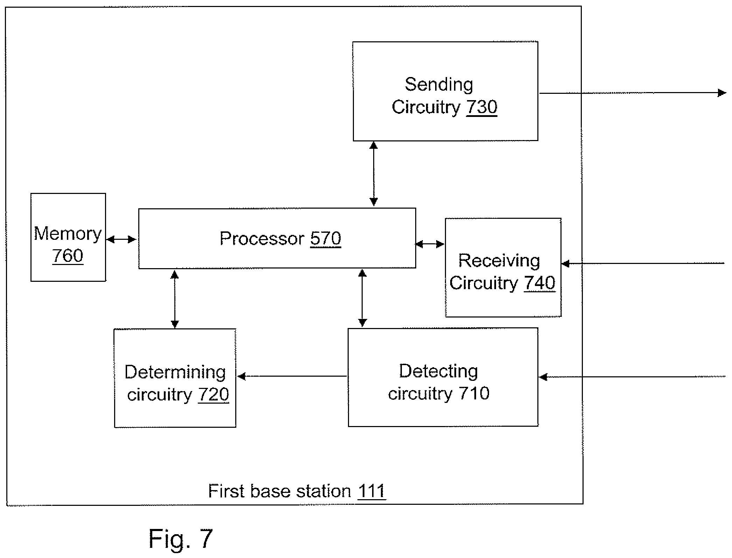

To perform the method actions for determining a spectrum allocation to be used by the first base station 111 in the wireless network 100 described above in relation to Figure 4, the first base station 111 comprises the following arrangement depicted in **Figure 7.** As mentioned above, the wireless network 100 is dedicated a spectrum S. The first base station 111 is associated with a first operator.

The first base station 111 comprises a **detecting circuitry 710** configured to detect a number N of second signals. Each second signal is transmitted by the respective second base station 112 to announce its intended use of said spectrum at a time t. Each second base station 112 is associated with a respective second operator or the first operator. One or more of the second signals may be adapted to be received from the respective second base station 112 via a user equipment 120 associated with the second operator or the first operator.

The first base station 111 comprises a **determining circuitry 720** configured to determine the spectrum allocation to be used by the first base station 111 at the time t as a subset of the spectrum S. The subset of the spectrum S is a function of N. The function of N may be a fraction 1/N+1 of the subset of the spectrum S. As another example, the function of N may be a function of operator weights.

In some embodiments, the number N of second signals represents the number of second operators.

In some embodiments, the second signals are adapted to be detected on the announcement channel of the cellular system 100.

One or more of the second signals may be adapted to be received from the respective second base station 112 via a user equipment 120. In some embodiments, the one or more of the second signals are adapted to be detected on an announcement forwarding channel of the wireless network 100.

The first base station 111 may further comprise a **sending circuitry 730** configured to send the first signal to announce that the first base station 111 intends to use said spectrum S at a time t.

In some embodiments, the sending circuitry 730 is further configured to send the first signal on an announcement channel of the wireless network 100.

The number N of second signals may be adapted to be one or more than one. The first signal may comprises a first identity $Id_x$ associated with an order x. Each one or more second signals comprise a respective second identity associated with a respective order. The first identity and the one or more second identities make up a set of identities $\{Id_n\}$. In some embodiments, the allocated position within the spectrum S is adapted to be given by the order x of the first identity $Id_x$ in the set of identities $\{Id_n\}$.

The sending circuitry 730 may further be configured to send the first signal comprising the first identity $Id_x$ directly to the one or more second base stations 112, or via a user equipment 120 detecting the first signal and forwarding the first signal comprising the first identity $Id_x$ to the one or more second base stations 112.

The first base station 111 further comprises a **receiving circuitry 740** which may be configured to receive a message from a control node 130. The message may comprise information which operators that are active in the neighborhood of the base station 110.

In some embodiments, the message is adapted to be received on a master announcement channel.

The embodiments herein for determining a spectrum allocation to be used by the first base station 111 in the wireless network 100 may be implemented through one or more processors, such as a **processor 750** in the first base station 111 depicted in Figure 7, together with computer program code for performing the functions and actions of the embodiments herein. The program code mentioned above may also be provided as a computer program product, for instance in the form of a data carrier carrying computer program code for performing the embodiments herein when being loaded into the in the first base station 111. One such carrier may be in the form of a CD ROM disc. It is however feasible with other data carriers such as a memory stick. The computer program code may furthermore be provided as pure program code on a server and downloaded to the first base station 111.

The first base station 111 may further comprise a **memory 760** comprising one or more memory units. The memory 360 is arranged to be used to store: data, received data streams, received information, configurations, schedulings, and applications to perform the methods herein when being executed in the first base station 111.

Those skilled in the art will also appreciate that the detecting circuitry 710, determining circuitry 720, sending circuitry 730, or receiving circuitry 740 described above may refer to a combination of analog and digital circuits, and/or one or more processors configured with software and/or firmware, e.g. stored in a memory, that when executed by the one or more processors such as the processor 750 perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

When using the word "comprise" or "comprising" it shall be interpreted as non-limiting, i.e. meaning "consist at least of".

The embodiments herein are not limited to the above described preferred embodiments. Various alternatives and modifications may be used. Therefore, the above embodiments should not be taken as limiting the scope of the invention, which is defined by the appended claims.

**Claims**

1.  A method in a first base station (111) for determining a spectrum allocation to be used by the first base station (111) in a wireless network (100) and for informing other second base stations (112) about said spectrum allocation, which wireless network (100) is dedicated a spectrum S, and which first base station (111) is associated with a first operator, the method comprising:

    *detecting* (403) a number N of second signals, wherein each second signal is transmitted by a respective second base station (112) to announce its intended use of said spectrum at a time t, each second base station (112) being associated with a respective second operator or the first operator, wherein the number N of second signals is one or more than one, *determining* (404) the spectrum allocation to be used by the first base station (111) at the time t as a subset of the spectrum S, wherein a bandwidth of the subset of the spectrum S allocated to the first base station is a function of N, and the method further comprising:

> *sending* (402) a first signal to each second base station to announce that the first base station (111) intends to use said subset of the spectrum S at the time t,
> wherein the first signal comprises a first identity $Id_x$ associated with an order x,
> wherein each one or more second signals comprise a respective second identity associated with a respective order,
> wherein the first identity and the one or more second identities make up a set of identities $\{Id_n\}$, and
> wherein an allocated position of said subset of the spectrum S is given by the order x of the first identity $Id_x$ in the set of identities $\{Id_n\}$.

2. The method according to claim 1, wherein the function of N is a fraction 1/(N+1) of the subset of the spectrum S.

3. The method according to claim 1, wherein the function of N is a function of operator weights.

4. The method according to any of the claims 1-3, wherein the number N of second signals represents the number of second operators.

5. The method according to any of the claims 1-4, wherein one or more of the second signals are received from the respective second base station (112) via a user equipment (120) associated with the second operator or the first operator.

6. The method according to any of the claims 1-5, wherein one or more of the second signals are received from the respective second base station (112) via a user equipment (120), and wherein the one or more of the second signals are detected on a announcement forwarding channel of the wireless network (100).

7. The method according to claim 1, wherein *sending* (402) the first signal is performed by sending the first signal comprising the first identity ($Id_x$) directly to the one or more second base stations (112), or via a user equipment (120) detecting the first signal and forwarding the first signal comprising the first identity ($Id_x$) to the one or more second base stations (112).

8. A first base station (111) for determining a spectrum allocation to be used by the first base station (111) in a wireless network (100) and for informing other second base stations (112) about said spectrum allocation, which wireless network (100) is dedicated a spectrum S, and which first base station (111) is associated with a first operator, the first base station (111) comprising:

> a detecting circuitry (710) configured to detect a number N of second signals, wherein each second signal is transmitted by a respective second base station (112) to announce its intended use of said spectrum at a time t, each second base station (112) being associated with a respective second operator or the first operator, wherein the number N of second signals is adapted to be one or more than one and
> a determining circuitry (720) configured to determine the spectrum allocation to be used by the first base station (111) at the time t as a subset of the spectrum S, wherein a bandwidth of the subset of the spectrum S allocated to the first base station is a function of N, the first base station (111) further comprising:

> > a sending circuitry (730) configured to send a first signal to each second base station to announce that the first base station (111) intends to use said subset of the spectrum S at the time t,
> > wherein the first signal comprises a first identity $Id_x$ associated with an order x,
> > wherein each one or more second signals comprise a respective second identity associated with a respective order,
> > wherein the first identity and the one or more second identities make up a set of identities $\{Id_n\}$, and
> > wherein an allocated position of said subset of the spectrum S is adapted to be given by the order x of the first identity $Id_x$ in the set of identities $\{Id_n\}$.

9. The first base station (111) according to claim 8, wherein the function of N is a fraction 1/(N+1) of the subset of the spectrum S.

10. The first base station (111) according to claim 8, wherein the function of N is a function of operator weights.

**11.** The first base station (111) according to claim 8, wherein the sending circuitry (730) is further configured to send the first signal comprising the first identity ($Id_x$) directly to the one or more second base stations (112), or via a user equipment (120) detecting the first signal and forwarding the first signal comprising the first identity ($Id_x$) to the one or more second base stations (112).

**12.** The first base station (111) according to any of the claims 8-11, wherein one or more of the second signals are adapted to be received from the respective second base station (112) via a user equipment (120), and wherein the one or more of the second signals are adapted to be detected on an announcement forwarding channel of the wireless network (100).

**13.** The first base station (111) according to any of the claims 8-12, wherein one or more of the second signals are adapted to be received from the respective second base station (112) via a user equipment (120) associated with the second operator or the first operator.

**Patentansprüche**

**1.** Verfahren in einer ersten Basisstation (111) zum Bestimmen einer Spektrumszuweisung, die von der ersten Basisstation (111) in einem drahtlosen Netzwerk (100) zu verwenden ist, und zum Informieren anderer zweiter Basisstationen (112) über die Spektrumszuweisung, wobei dem drahtlosen Netzwerk (100) ein Spektrum S dediziert ist und wobei die erste Basisstation (111) mit einem ersten Betreiber verknüpft ist, wobei das Verfahren Folgendes umfasst:

*Detektieren* (403) einer Anzahl N zweiter Signale, wobei jedes zweite Signal von einer jeweiligen zweiten Basisstation (112) übertragen wird, um ihre beabsichtigte Verwendung des Spektrums zu einer Zeit t anzukündigen, wobei jede zweite Basisstation (112) mit einem jeweiligen zweiten Betreiber oder dem ersten Betreiber verknüpft ist, wobei die Anzahl N zweiter Signale eins oder mehr als eins ist,
*Bestimmen* (404) der Spektrumszuweisung, die von der ersten Basisstation (111) zu der Zeit t zu verwenden ist, als Untersatz des Spektrums S, wobei eine Bandbreite des Untersatzes des Spektrums S, das der ersten Basisstation zugewiesen ist, eine Funktion von N ist und wobei das Verfahren ferner Folgendes umfasst:

*Senden* (402) eines ersten Signals an jede zweite Basisstation, um anzukündigen, dass die erste Basisstation (111) beabsichtigt, den Untersatz des Spektrums S zu der Zeit t zu verwenden,
wobei das erste Signal eine erste Identität $Id_x$ umfasst, die mit einem Rang x verknüpft ist,
wobei jedes eine oder mehrere zweite Signale eine jeweilige zweite Identität umfassen, die mit einem jeweiligen Rang verknüpft ist,
wobei die erste Identität und die eine oder die mehreren zweiten Identitäten einen Satz von Identitäten $\{Id_n\}$ bilden und
wobei eine zugewiesene Position des Untersatzes des Spektrums S durch den Rang x der ersten Identität $Id_x$ im Satz von Identitäten $\{Id_n\}$ gegeben ist.

**2.** Verfahren nach Anspruch 1, wobei die Funktion von N ein Bruch $1/(N+1)$ des Untersatzes des Spektrums S ist.

**3.** Verfahren nach Anspruch 1, wobei die Funktion von N eine Funktion von Betreibergewichtungen ist.

**4.** Verfahren nach einem der Ansprüche 1-3, wobei die Anzahl N zweiter Signale die Anzahl zweiter Betreiber repräsentiert.

**5.** Verfahren nach einem der Ansprüche 1-4, wobei eines oder mehrere der zweiten Signale von der jeweiligen zweiten Basisstation (112) via eine Teilnehmereinrichtung (120) empfangen werden, die mit dem zweiten Betreiber oder dem ersten Betreiber verknüpft ist.

**6.** Verfahren nach einem der Ansprüche 1-5, wobei eines oder mehrere der zweiten Signale von der jeweiligen zweiten Basisstation (112) via eine Teilnehmereinrichtung (120) empfangen werden und wobei das eine oder die mehreren zweiten Signale auf einem Ankündigungsweiterleitungskanal des drahtlosen Netzwerks (100) detektiert werden.

**7.** Verfahren nach Anspruch 1, wobei das *Senden* (402) des ersten Signals durch das Senden des ersten Signals, das die erste Identität ($Id_x$) umfasst, direkt zu der einen oder den mehreren zweiten Basisstationen (112) durchgeführt wird oder via eine Teilnehmereinrichtung (120), die das erste Signal detektiert und das erste Signal, das die erste

Identität (Id$_x$) umfasst, zu der einen oder den mehreren zweiten Basisstationen (112) weiterleitet.

8. Erste Basisstation (111) zum Bestimmen einer Spektrumszuweisung, die von der ersten Basisstation (111) in einem drahtlosen Netzwerk (100) zu verwenden ist, und zum Informieren anderer zweiter Basisstationen (112) über die Spektrumszuweisung, wobei dem drahtlosen Netzwerk (100) ein Spektrum S dediziert ist und wobei die erste Basisstation (111) mit einem ersten Betreiber verknüpft ist, wobei die erste Basisstation (111) Folgendes umfasst:

eine Detektionsschaltung (710), die dazu ausgelegt ist, eine Anzahl N zweiter Signale zu detektieren, wobei jedes zweite Signal von einer jeweiligen zweiten Basisstation (112) übertragen wird, um ihre beabsichtigte Verwendung des Spektrums zu einer Zeit t anzukündigen, wobei jede zweite Basisstation (112) mit einem jeweiligen zweiten Betreiber oder dem ersten Betreiber verknüpft ist, wobei die Anzahl N zweiter Signale angepasst ist, eins oder mehr als eins zu sein, und

eine Bestimmungsschaltung (720), die dazu ausgelegt ist, die Spektrumszuweisung, die von der ersten Basisstation (111) zu der Zeit t zu verwenden ist, als Untersatz des Spektrums S zu bestimmen, wobei eine Bandbreite des Untersatzes des Spektrums S, das der ersten Basisstation zugewiesen ist, eine Funktion von N ist, wobei die erste Basisstation (111) ferner Folgendes umfasst:

eine Sendeschaltung (730), die dazu ausgelegt ist, ein erstes Signal an jede zweite Basisstation zu senden, um anzukündigen, dass die erste Basisstation (111) beabsichtigt, den Untersatz des Spektrums S zu der Zeit t zu verwenden,
wobei das erste Signal eine erste Identität Id$_x$ umfasst, die mit einem Rang x verknüpft ist,
wobei jedes oder mehrere zweite Signale eine jeweilige zweite Identität umfassen, die mit einem jeweiligen Rang verknüpft ist,
wobei die erste Identität und die eine oder die mehreren zweiten Identitäten einen Satz von Identitäten {Id$_n$} bilden und
wobei eine zugewiesene Position des Untersatzes des Spektrums S angepasst ist, durch den Rang x der ersten Identität Id$_x$ im Satz von Identitäten {Id$_n$} gegeben zu sein.

9. Erste Basisstation (111) nach Anspruch 8, wobei die Funktion von N ein Bruch 1/(N+1) des Untersatzes des Spektrums S ist.

10. Erste Basisstation (111) nach Anspruch 8, wobei die Funktion von N eine Funktion von Betreibergewichtungen ist.

11. Erste Basisstation (111) nach Anspruch 8, wobei die Sendeschaltung (730) ferner dazu ausgelegt ist, das erste Signal, das die erste Identität (Id$_x$) umfasst, direkt zu der einen oder den mehreren zweiten Basisstationen (112) zu senden oder via eine Teilnehmereinrichtung (120), die das erste Signal detektiert und das erste Signal, das die erste Identität (Id$_x$) umfasst, zu der einen oder den mehreren zweiten Basisstationen (112) weiterleitet.

12. Erste Basisstation (111) nach einem der Ansprüche 8-11, wobei eines oder mehrere der zweiten Signale angepasst sind, von der jeweiligen zweiten Basisstation (112) via eine Teilnehmereinrichtung (120) empfangen zu werden und wobei das eine oder die mehreren zweiten Signale angepasst sind, auf einem Ankündigungsweiterleitungskanal des drahtlosen Netzwerks (100) detektiert zu werden.

13. Erste Basisstation (111) nach einem der Ansprüche 8-12, wobei eines oder mehrere der zweiten Signale angepasst sind, von der jeweiligen zweiten Basisstation (112) via eine Teilnehmereinrichtung (120) empfangen zu werden, die mit dem zweiten Betreiber oder dem ersten Betreiber verknüpft ist.

**Revendications**

1. Procédé mis en oeuvre dans une première station de base (111) en vue de déterminer une affectation de spectre devant être utilisée par la première station de base (111) dans un réseau sans fil (100) et d'informer d'autres secondes stations de base (112) en ce qui concerne ladite affectation de spectre, lequel réseau sans fil (100) se voit dédier un spectre S, et laquelle première station de base (111) est associée à un premier opérateur, le procédé comportant les étapes ci-dessous consistant à :

*détecter* (403) un nombre N de seconds signaux, dans lequel chaque second signal est transmis par une seconde station de base respective (112) pour annoncer son utilisation attendue dudit spectre à un instant t, chaque seconde station de base (112) étant associée à un second opérateur respectif ou au premier opérateur ;
dans lequel le nombre N de seconds signaux est égal ou supérieur à un,
*déterminer* (404) l'affectation de spectre devant être utilisée par la première station de base (111) à l'instant t en tant qu'un sous-ensemble du spectre S, dans lequel une largeur de bande du sous-ensemble du spectre S affecté à la première station de base est une fonction de N, et dans lequel le procédé comporte en outre les étapes ci-dessous consistant à :

*envoyer* (402) un premier signal à chaque seconde station de base pour annoncer que la première station de base (111) a l'intention d'utiliser ledit sous-ensemble du spectre S à l'instant t ;
dans lequel le premier signal comporte une première identité $Id_x$ associée à un ordre x ;
dans lequel chaque dit un ou plusieurs seconds signaux comporte une seconde identité respective associée à un ordre respectif ;
dans lequel la première identité et ladite une ou lesdites plusieurs secondes identités forment un ensemble d'identités $\{Id_n\}$ ; et
dans lequel une position affectée dudit sous-ensemble du spectre S est donnée par l'ordre x de la première identité $Id_x$ dans l'ensemble d'identités $\{Id_n\}$.

2. Procédé selon la revendication 1, dans lequel la fonction de N est une fraction 1/(N+1) du sous-ensemble du spectre S.

3. Procédé selon la revendication 1, dans lequel la fonction de N est une fonction de pondérations d'opérateurs.

4. Procédé selon l'une quelconque des revendications 1 à 3, dans lequel le nombre N de seconds signaux représente le nombre de seconds opérateurs.

5. Procédé selon l'une quelconque des revendications 1 à 4, dans lequel un ou plusieurs des seconds signaux sont reçus en provenance de la seconde station de base respective (112) par l'intermédiaire d'un équipement d'utilisateur (120) associé au second opérateur ou au premier opérateur.

6. Procédé selon l'une quelconque des revendications 1 à 5, dans lequel un ou plusieurs des seconds signaux sont reçus en provenance de la seconde station de base respective (112) par l'intermédiaire d'un équipement d'utilisateur (120), et dans lequel ledit un ou lesdits plusieurs des seconds signaux sont détectés sur un canal d'acheminement d'annonces du réseau sans fil (100).

7. Procédé selon la revendication 1, dans lequel l'étape d'*envoi* (402) du premier signal est mise en oeuvre en envoyant le premier signal comportant la première identité ($Id_x$) directement à ladite une ou auxdites plusieurs secondes stations de base (112), ou par l'intermédiaire d'un équipement d'utilisateur (120) détectant le premier signal et acheminant le premier signal comportant la première identité ($Id_x$) à ladite une ou auxdites plusieurs secondes stations de base (112).

8. Première station de base (111) pour déterminer une affectation de spectre devant être utilisée par la première station de base (111) dans un réseau sans fil (100) et pour informer d'autres secondes stations de base (112) en ce qui concerne ladite affectation de spectre, lequel réseau sans fil (100) se voit dédier un spectre S, et laquelle première station de base (111) est associée à un premier opérateur, la première station de base (111) comportant :

un montage de circuits de détection (710) configuré de manière à détecter un nombre N de seconds signaux, dans lequel chaque second signal est transmis par une seconde station de base respective (112) pour annoncer son utilisation attendue dudit spectre à un instant t, chaque seconde station de base (112) étant associée à un second opérateur respectif ou au premier opérateur, dans lequel le nombre N de seconds signaux est apte à être égal ou supérieur à un, et
un montage de circuits de détermination (720) configuré de manière à déterminer l'affectation de spectre devant être utilisée par la première station de base (111) à l'instant t en tant qu'un sous-ensemble du spectre S, dans lequel une largeur de bande du sous-ensemble du spectre S affecté à la première station de base est une fonction de N, la première station de base (111) comportant en outre :

un montage de circuits d'envoi (730) configuré de manière à envoyer un premier signal à chaque seconde station de base pour annoncer que la première station de base (111) a l'intention d'utiliser ledit sous-ensemble du spectre S à l'instant t ;
dans lequel le premier signal comporte une première identité $Id_x$ associée à un ordre x ;

dans lequel chaque dit un ou plusieurs seconds signaux comporte une seconde identité respective associée à un ordre respectif ;

dans lequel la première identité et ladite une ou lesdites plusieurs secondes identités forment un ensemble d'identités $\{Id_n\}$ ; et

dans lequel une position affectée dudit sous-ensemble du spectre S est apte à être donnée par l'ordre x de la première identité $Id_x$ dans l'ensemble d'identités $\{Id_n\}$.

9. Première station de base (111) selon la revendication 8, dans laquelle la fonction de N est une fraction 1/(N+1) du sous-ensemble du spectre S.

10. Première station de base (111) selon la revendication 8, dans laquelle la fonction de N est une fonction de pondérations d'opérateurs.

11. Première station de base (111) selon la revendication 8, dans laquelle le montage de circuits d'envoi (730) est en outre configuré de manière à envoyer le premier signal comportant la première identité ($Id_x$) directement à ladite une ou auxdites plusieurs secondes stations de base (112), ou par l'intermédiaire d'un équipement d'utilisateur (120) détectant le premier signal et acheminant le premier signal comportant la première identité ($Id_x$) à ladite une ou auxdites plusieurs secondes stations de base (112).

12. Première station de base (111) selon l'une quelconque des revendications 8 à 11, dans laquelle un ou plusieurs des seconds signaux sont aptes à être reçus en provenance de la seconde station de base respective (112) par l'intermédiaire d'un équipement d'utilisateur (120), et dans laquelle ledit un ou lesdits plusieurs des seconds signaux sont aptes à être détectés sur un canal d'acheminement d'annonces du réseau sans fil (100).

13. Première station de base (111) selon l'une quelconque des revendications 8 à 12, dans laquelle un ou plusieurs des seconds signaux sont aptes à être reçus en provenance de la seconde station de base respective (112) par l'intermédiaire d'un équipement d'utilisateur (120) associé au second opérateur ou au premier opérateur.

State of the Art

Fig. 1

Fig. 2

EP 2 820 901 B1

Fig. 3

EP 2 820 901 B1

Fig. 4

EP 2 820 901 B1

Fig. 5

Fig. 6

Sending Circuitry 730

Receiving Circuitry 740

Detecting circuitry 710

Processor 570

Determining circuitry 720

Memory 760

First base station 111

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011127447 A1

### Non-patent literature cited in the description

- **KIM.** A Dynamic Spectrum Allocation between Network Operators with Priority-based Sharing and Negotiation. *2005 IEEE 16th International Symposium on Personnel, Indoor and Mobile Communication*

- SPECTRUM COORDINATION PROTOCOLS AND ALGORITHMS FOR COGNITIVE RADIO NETWOKRS. **XIANGPENG JING.** Ph.D dissertation. 01 January 2008